# EUROPEAN PATENT SPECIFICATION

(11) **EP 2 131 066 B1**
(45) Date of publication and mention of the grant of the patent: **19.12.2012**
(21) Application number: 09159593.4
(22) Date of filing: 07.05.2009
(51) Int. Cl.: F16H 7/08, F16H 7/12

(54) **Chain tensioner**
Kettenspanner
Tendeur de chaîne

(30) Priority: 16.05.2008 JP 2008129809
(43) Date of publication of application: 09.12.2009
(73) Proprietor: NTN Corporation, Osaka-shi, Osaka 550-0003 (JP)
(72) Inventor: Ryouno, Yoshiaki c/o NTN Corporation, Iwata-shi Shizuoka 438-0037 (JP); Sato, Seiji c/o NTN Corporation, Iwata-shi Shizuoka 438-0037 (JP)
(74) Representative: Grünecker, Kinkeldey, Stockmair & Schwanhäusser

(56) References cited:
- JP-A- 2006 009 909
- JP-A- 2006 220 223
- US-A- 4 099 298
- US-A1- 2006 270 500
- US-A1- 2006 281 595

## Description

### BACKGROUND OF THE INVENTION

This invention relates to a chain tensioner for keeping constant the tension of a timing chain or a timing belt for driving camshafts.

In a chain transmission device for transmitting the rotation of a crankshaft to camshafts through a timing belt or a timing chain (hereinafter referred to as "chain", but it is to be understood that the word "chain" used throughout the specification refers also to "belt"), the tension of the chain is kept constant by bringing a pivotable chain guide into contact with the slack side of the chain and applying an adjusting force to the chain guide from a chain tensioner.

A typical conventional chain tensioner includes a housing defining a cylinder chamber, a plunger mounted in the cylinder chamber, and a return spring mounted in the cylinder chamber and biasing the plunger outwardly of the cylinder chamber. The housing is formed with an oil supply passage communicating with a pressure chamber defined in the cylinder chamber behind the plunger. A check valve is provided at the oil outlet of the oil supply passage to prevent backflow of oil in the pressure chamber into the oil supply passage. A pushing force applied to the plunger from the chain is dampened by the oil in the pressure chamber, which is supplied into the pressure chamber through the oil supply passage.

In this chain tensioner, because the plunger is always biased outwardly by the return spring, when mounting the chain tensioner, the housing has to be fixed in position with the plunger kept pushed in the housing. Thus, it is extremely troublesome to mount the chain tensioner in position.

Especially with an externally mounted type of chain tensioner, of which the housing is inserted into a tensioner mounting hole formed in an engine cover, and bolted to the engine cover, it is difficult to keep the plunger retracted in the housing, and thus it is extremely difficult to mount the chain tensioner in position.

In order to avoid this problem, JP Patent Publication 2007-32685A proposes an improved chain tensioner in which the housing has a stepped setting groove formed in its inner periphery near its open end and comprising a deep portion and a shallow portion located nearer to the open end than is the deep portion, and an elastically deformable setting ring having two separate circumferential ends is received in the setting groove in a radially compressed state. By engaging the setting ring in an engaging groove formed in the outer periphery of the plunger near its front end while keeping the setting ring in elastic contact with the bottom of the shallow portion of the setting groove, the plunger is kept in a retracted position.

With this arrangement, because the plunger can be kept in a retracted position (initial set position) by the setting ring, the chain tensioner can be easily mounted in position. Also, after the chain tensioner has been mounted in position, by cranking the engine, the tension of the chain increases, so that the plunger is pushed in by the chain. This automatically disengages the setting ring from the engaging groove, thus reliably releasing the initial set position.

In the chain tensioner disclosed in JP 2007-32685A, the setting ring has circumferentially opposed separate ends having a pair of tabs, respectively. By holding and moving the tabs toward each other, the setting ring can be radially compressed. The tabs extend radially outwardly from the body of the setting ring. If the radially outer free ends of the tabs are located radially outwardly of the outer periphery of the housing, the housing cannot be inserted into or disengaged from the tensioner mounting hole formed in the engine cover. Thus, the tabs have to be entirely located inside the outer periphery of the housing.

For this purpose, the housing necessarily has a large outer diameter, and thus is heavy in weight.
JP 2006009909 A, US 2006/0270500 A1 and JP 20066220223 also show chain tensioners. US 2006/0281595 A1 discloses a tensioner and US 4099298 A discloses a ring-shaped clamp. The above mentioned document JP 2007-032685A corresponds to the preamble of claim 1.

An object of the present invention is to provide a chain tensioner of which the plunger can be kept in a retracted position and of which the housing is small in size and light in weight.

### SUMMARY OF THE INVENTION

In order to achieve this object, the present invention provides a chain tensioner comprising a cylindrical housing having an open end and a closed end, a plunger slidably mounted in said housing, a return spring mounted in said housing and biasing said plunger outwardly of said housing, said housing being formed with an oil supply passage communicating with a pressure chamber defined in said housing behind said plunger, a check valve provided at an oil outlet of said oil supply passage for preventing backflow of oil in said pressure chamber into said oil supply passage, said housing being further formed with a stepped setting groove in a radially inner surface thereof near said open end, said setting groove comprising a deep portion and a shallow portion located nearer to said open end than is said deep portion, and a radially elastically deformable setting ring having two separate opposed circumferential ends and received in said setting groove in a radially compressed state, said setting ring including a pair of tabs provided at said two separate opposed circumferential ends, respectively, and received in a cutout formed in said housing at said open end, wherein said setting ring can be radially compressed by operating said tabs, and wherein said plunger can be retained in a position where the plunger is pushed in the housing by engaging said setting ring in an engaging groove formed in a radially outer surface of said plunger near its front end, while keeping said setting ring in elastic contact with a bottom of said shallow portion of said setting groove, characterized in that said tabs of the setting ring extend in directions that intersect a plane perpendicular to a central axis of said setting ring.

The pair of tabs may be circular in shape, in the shape of water drops, arc-shaped, substantially U-shaped, substantially V-shaped, substantially straight in shape, or substantially straight in shape and extend obliquely radially outwardly. The tabs of any of the above-mentioned shapes make it possible to easily radially compress the setting ring from radially outside of the housing, using a tool for removing snap rings for holes

According to the present invention, because the tabs of the set rings for radially compressing the set ring extend in directions that intersect a plane perpendicular to the central axis of the setting ring, compared to a conventional chain tensioner of which the pair of tabs of the setting ring extend radially outwardly from the main body of the ring, it is possible to reduce the wall thickness of the housing, and thus to reduce its size and weight.

### BRIEF DESCRIPTION OF THE DRAWINGS

Fig. 1 is a sectional view of a chain tensioner embodying the present invention:

Fig. 2 is a sectional view taken along line II-II of Fig. 1;

Fig. 3 is a left-hand side view of Fig. 2;

Fig. 4 is right-hand side view of Fig. 2;

Fig. 5 is an enlarged sectional view of a portion of the chain tension where the setting ring is mounted;

Fig. 6 is a view similar to Fig. 5 showing an initial state where the plunger has been released;

Fig. 7 is a view similar to Fig. 5 showing a state where the plunger has been released;

Fig. 8 is a partial sectional view of the chain tensioner of Fig. 1, showing how the plunger is prevented from being separated from the housing;

Figs. 9 to 12 are partial side views of the chain tensioner of Fig. 1 with different setting rings;

Fig. 13A is a partial side view of the chain tensioner of Fig. 1 with a still different setting ring;

Fig. 13B is a cross-sectional view of Fig. 13A;

Fig. 14A is a partial side view of the chain tensioner of Fig. 1 with yet another setting ring;

Fig. 14B is a cross-sectional view of Fig. 14A; and

Fig. 15 is a sectional view of another chain tensioner embodying the present invention.

### DETAILED DESCRIPTION OF THE PREFERRED EMBODIMENTS

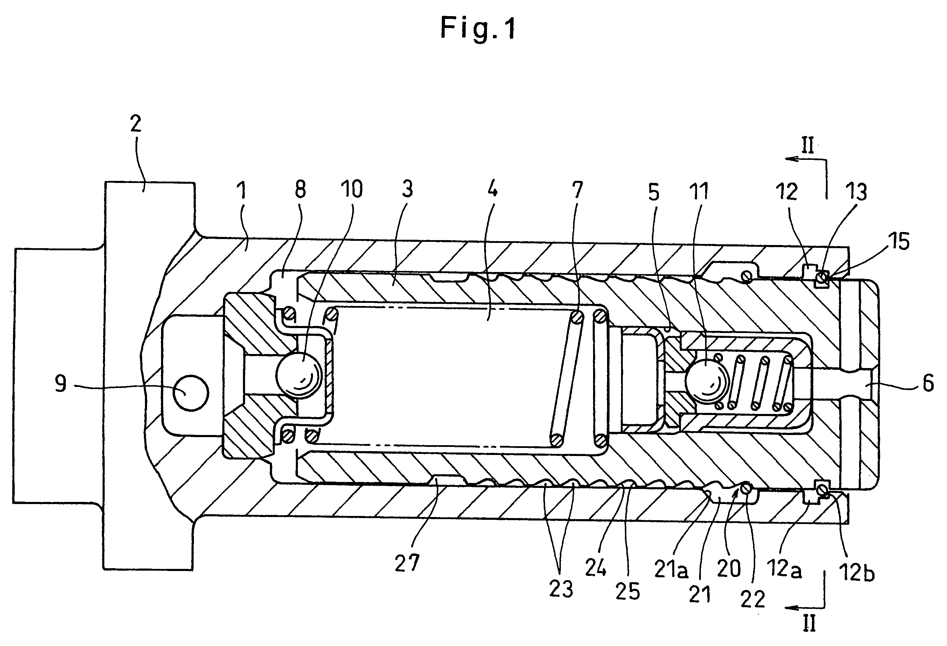

Now the embodiments of the present invention are described with reference to the drawings. The chain tensioner shown in Fig. 1 includes a cylindrical housing 1 having a closed end and an open end. The housing 1 includes a flange 2 configured to be mounted to an engine cover on its outer periphery at the closed end.

A plunger 3 is slidably mounted in the housing 1. The plunger 3 has a spring mounting hole 4 that opens at the rear end of the plunger 3, a valve mounting hole 5 formed in the closed front end wall of the spring mounting hole 4, and a pressure release hole 6 through which the valve mounting hole 5 communicates with the outside. A return spring 7 is mounted between the closed end wall of the spring mounting hole 4 and the closed end of the housing 1. The return spring 7 biases the plunger 3 outwardly of the housing 1.

An oil supply passage 9 is formed in the closed end wall of the housing 1 that communicates with a pressure chamber 8 defined in the housing 1 behind the plunger 3. A check valve 10 is provided at the oil supply passage 9. The check valve 10 is configured to close the oil supply passage 9 when the pressure in the pressure chamber 8 exceeds the supply pressure of oil supplied into the oil supply passage 9, thereby preventing backflow of oil into the oil supply passage 9.

A relief valve 11 is mounted in the valve mounting hole 5 formed in the plunger 3. The relief valve 11 is configured to open when the pressure in the pressure chamber 8 exceeds its set pressure value, thereby discharging oil in the pressure chamber 8 to the outside through the pressure release hole 6.

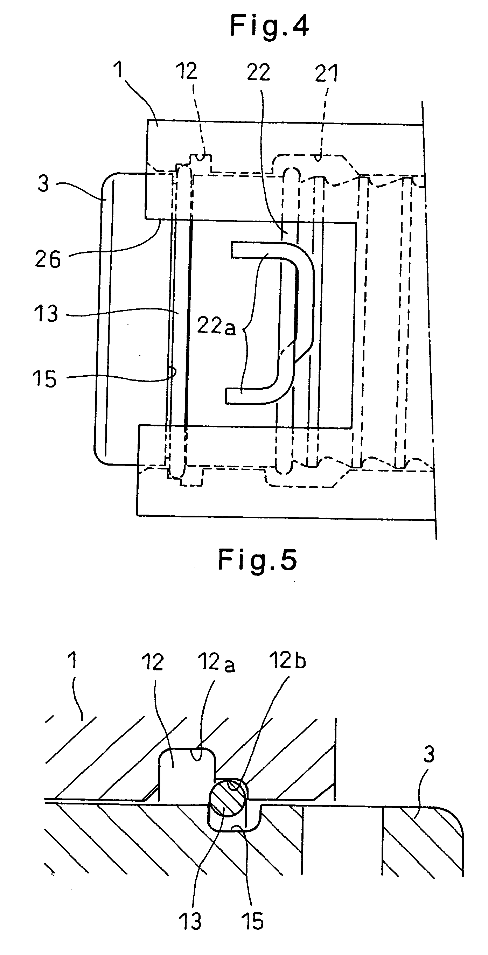

The housing 1 has a setting groove 12 formed in its radially inner surface near the open end thereof. As shown in Fig. 5, the setting groove 12 is a stepped groove comprising a deep portion 12a and a shallow portion 12b located nearer to the open end of the housing 1 than is the deep portion 12a.

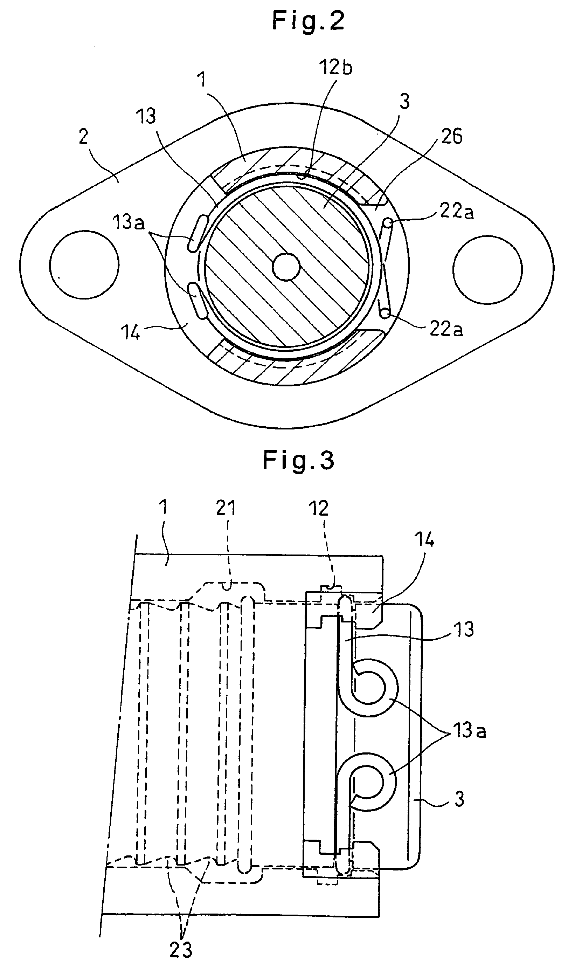

A radially elastically deformable setting ring 13 is received in the setting groove 12. As shown in Fig. 3, the setting ring 13 has circumferentially opposed separate ends having a pair of tabs 13a, respectively. By holding and moving the tabs 13a toward each other, the setting ring 13 can be radially compressed.

The setting ring 13 is received in the setting groove 12 in a radially compressed state. In this state, the tabs 13a are received in a cutout 14 formed in the housing 1 at its open end.

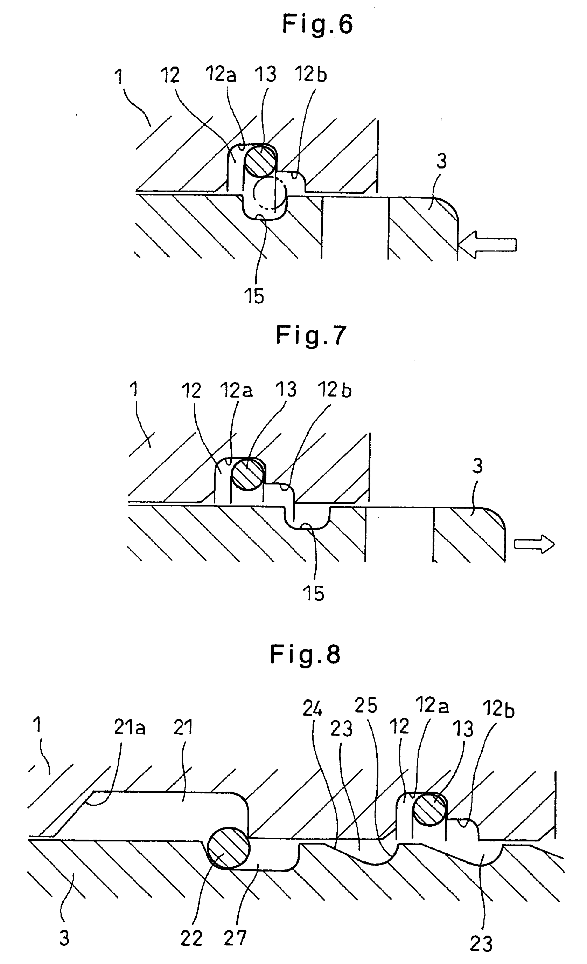

Fig. 6 shows a state in which the setting ring 13 is received in the deep portion 12a of the setting groove 12 while in elastic contact with its bottom. The depth of the deep portion 12a is set such that in the state of Fig. 6, the inner diameter of the setting ring 13 is larger than the outer diameter of the plunger 3.

Fig. 5 shows a state in which the setting ring 13 is received in the shallow portion 12b of the setting groove 12 while in elastic contact with its bottom. The depth of the shallow portion 12b is set such that in the state of Fig. 5, the inner diameter of the setting ring 13 is smaller than the outer diameter of the plunger 3.

As shown in Fig. 3, the tabs 13a of the setting ring 13 are circular in shape, and extend in directions that intersect a plane perpendicular to the central axis of the setting ring 13.

As shown in Fig. 5, the plunger 3 has an engaging groove 15 formed in the outer periphery thereof near its front end in which the setting ring 13 is engageable. When the setting ring 13 is engaged both in the engaging groove 15 and the shallow portion 12b of the setting groove 12, the plunger 3 is prevented from moving further outwardly.

As shown in Fig. 1, a retraction restricting means 20 is provided between the housing 1 and the plunger 3 to prevent the plunger 3 from moving more than a predetermined distance toward the closed end of the housing 1 when a pushing force is applied to the plunger 3.

The retraction restricting means 20 comprises a ring receiving groove 21 formed in the inner periphery of the housing 1 at a position slightly spaced from the setting groove 12 toward the closed end of the housing 1, a register ring 22 received in the ring receiving groove 21, and a plurality of circumferential grooves 23 formed in the outer periphery of the plunger so as to be axially spaced from each other at equal intervals. The register ring 22 is engageable in any one of the circumferential grooves 23 while being pressed against its bottom. Each circumferential groove 23 comprises a tapered surface 24 extending obliquely radially inwardly toward the front end of the plunger 3, and an engaging surface 25 extending radially outwardly from the small-diameter front end of the tapered surface 24.

The register ring 22 has separate end portions that cross each other as shown in Fig. 4. The end portions are bent to define a pair of axially extending operating pieces 22a, respectively. The pair of operating pieces 22a protrude into a cutout 26 formed in the housing at its open end. By holding and moving the operating pieces 22a toward each other, the register ring 22 can be radially expanded.

With this retraction restricting means 20, when the plunger 3 is pushed by the return spring 7 and moves outwardly (advances), the register ring 22 can smoothly slide along the tapered surface 24 of one of the circumferential grooves 23 while being radially expanded. Thus, the plunger 3 can smoothly advance.

When a pushing force is applied to the plunger 3, the register ring 22 engages the engaging surface 25 of the circumferential groove 23 in which the ring 22 is received and is pushed back together with the plunger 3 until it engages a rear stopper surface 21a of the ring receiving groove 21. The plunger 3 is thus stopped at this position.

The plunger 3 is further formed in its outer periphery with an anti-separation groove 27 at a position spaced from the rearmost one of the circumferential grooves 23 toward the rear end of the plunger. Once the register ring 22 engages in the anti-separation groove 27, the plunger 3 cannot advance any further and thus is prevented from completely coming out of the housing.

The chain tensioner of this embodiment is mounted to a chain transmission device for driving camshafts with the plunger 3 pushed in the housing 1.

In order to push in the plunger 3 and keep it in this state, with the setting ring 13 received in the deep portion 12a of the setting groove 12 so as to be in elastic contact with the bottom of the deep portion 12a, the plunger 3 is pushed in until the engaging groove 15 of the plunger 3 is radially aligned with the setting ring 13. In this state, the tabs 13a are held by a tool for removing snap rings for holes to radially compress the setting ring 13 until the setting ring 13 is completely received in the engaging groove 15. Then, the plunger 3 is released to allow the plunger 3 to move outwardly under the force of the return spring 7.

When the plunger 3 is moved outwardly by the return spring 7, the setting ring 13 engages in the shallow portion 12b of the setting groove 12 as shown in Fig. 5. In this state, the setting ring 13 is trapped between the front wall of the shallow portion 12b of the setting groove 12 and the rear wall of the engaging groove 15. The plunger 3 is thus kept in this position. The tabs 13a are then released and the chain tensioner is mounted to a chain transmission device.

Because the plunger 3 can be kept in the retracted position by engaging the setting ring 13 both in the engaging groove 15 and the shallow portion 12b of the setting groove 12 in the above-described manner, it is not necessary to manually keep the plunger 3 pushed in. Thus, the chain tensioner can be extremely easily mounted to a chain transmission device.

While not shown, the chain tensioner is typically mounted to a chain transmission device by inserting its housing 1 into a tensioner mounting hole formed in an engine cover (chain cover) from outside the engine cover, and the flange 2 is bolted to the engine cover such that the plunger 3 faces a pivotable chain guide which is in contact with a slack side of the cam-driving chain.

After the chain tensioner has been mounted in position, the engine is cranked or the crankshaft is rotated in reverse in order to apply tension to the side of the chain on which the chain tensioner is mounted, which is the slack side during normal operation, in order to apply a pushing force, shown by arrow in Fig. 6, from the chain to the plunger 3 through the chain guide.

When the plunger 3 retracts under this pushing force and the engaging groove 15 is radially aligned with the deep portion 12a of the setting groove 12, the setting ring 13 radially and elastically expands spontaneously and is thus disengaged from the engaging groove 15 and completely received in the deep portion 12a as shown in Fig. 7.

In this state, when the chain slackens, the plunger 3 advances under the force of the return spring 7, thereby applying adjusting force to the chain through the chain guide. The chain tensioner thus keeps applying suitable tension to the chain.

Thus, after the chain tensioner has been mounted in position, simply by rotating the crankshaft to move the chain, the plunger 3 automatically becomes free without the need for any special step for releasing the plunger 3. Thus, the chain tensioner can be easily mounted in position.

After the chain tensioner has been mounted in position in the above manner, oil is supplied into the pressure chamber 8 through the oil supply passage 9 until the pressure chamber 8 is filled with oil to dampen the pushing force applied to the plunger 3 from the chain with the oil in the pressure chamber 8.

When this pushing force exceeds the force of the return spring 7, the plunger 3 retracts until the register ring 22 abuts the stopper surface 21a of the ring receiving groove 21. In this state, the register ring 22 is trapped between the stopper surface 21a and the engaging surface 25 of the circumferential groove 23 in which the ring 22 is received. This prevents further retraction of the plunger 3.

Thus, even if the chain is tensioned when the engine is stopped according to the stopped positions of the cams, since the plunger 3 is prevented from retracting due to the fact that the register ring 22 is trapped between the stopper surface 21a and the engaging surface 25, the chain is kept tensioned while the engine is at a stop. Thus, when the engine is restarted, the chain never slackens markedly, thus preventing flapping of the chain or skipping of gear teeth.

In this operational state of the chain tensioner, when the chain slackens, the plunger 3 moves outwardly under the force of the return spring 7, thereby re-tensioning the chain.

The plunger 3 can smoothly move outwardly because the register ring 22 slides smoothly along the tapered surface 24 while radially expanding when the plunger 3 moves outwardly.

When the plunger 3 moves outwardly by a predetermined distance, the register ring 22 moves into the immediately rear circumferential groove 23.

When the chain is removed for maintenance of the engine or its peripheral parts, the plunger 3 moves outwardly under the force of the return spring 7 until the anti-separation groove 27 is radially aligned with the register ring 22. At this position, the register ring 22 is radially and elastically compressed by its elasticity and engaged in the anti-separation groove 27 as shown in Fig. 8, thereby keeping the plunger 3 from coming out of the housing.

Thus, the plunger 3 and the return spring 7 never separate from the housing 1.

According to the present invention, as shown in Fig. 3, the tabs 13a of the setting ring 13, which are used to radially compress the setting ring 13, extend in directions that intersect a plane perpendicular to the central axis of the setting ring 13. Thus, compared to a conventional chain tensioner of which the pair of tabs of the setting ring extend radially outwardly from the main body of the ring, it is possible to reduce the wall thickness of the housing 1 of the chain tensioner according to the present invention, and thus to reduce its size and weight.

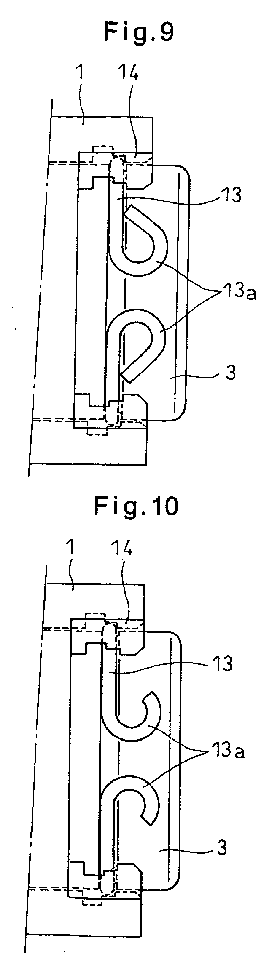

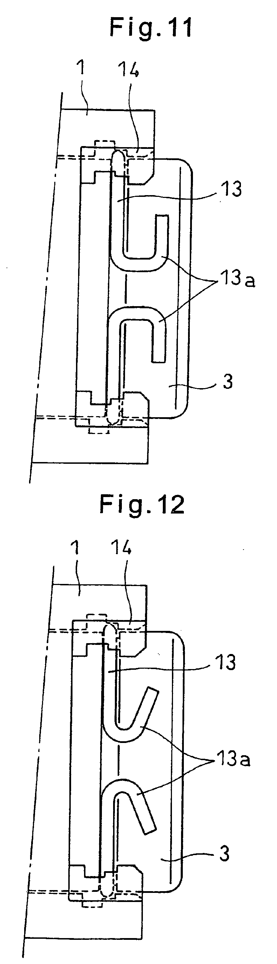

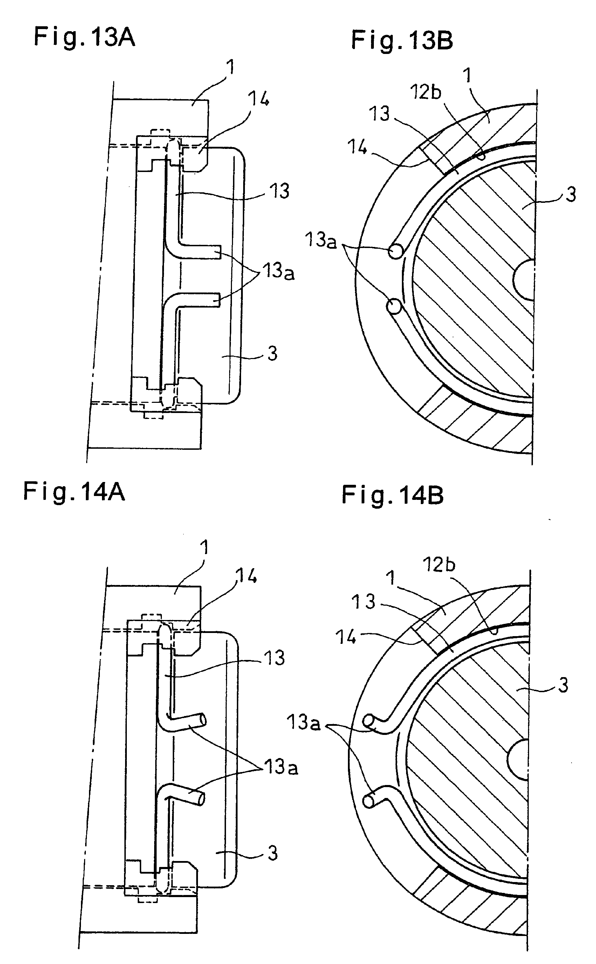

In the embodiment of the Fig. 3, the tabs 13a are circular in shape. But the tabs 13a may be shaped otherwise, as shown in Figs. 9 to 14. The tabs 13a shown in Fig. 9 are in the shape of water drops, those shown in Fig. 10 are arc-shaped, those shown in Fig. 11 are substantially U-shaped, those shown in Fig. 12 are substantially V-shaped, those shown in Figs. 13A and 13B are straight ones, and those shown in Figs. 14A and 14B are straight ones extending obliquely radially outwardly.

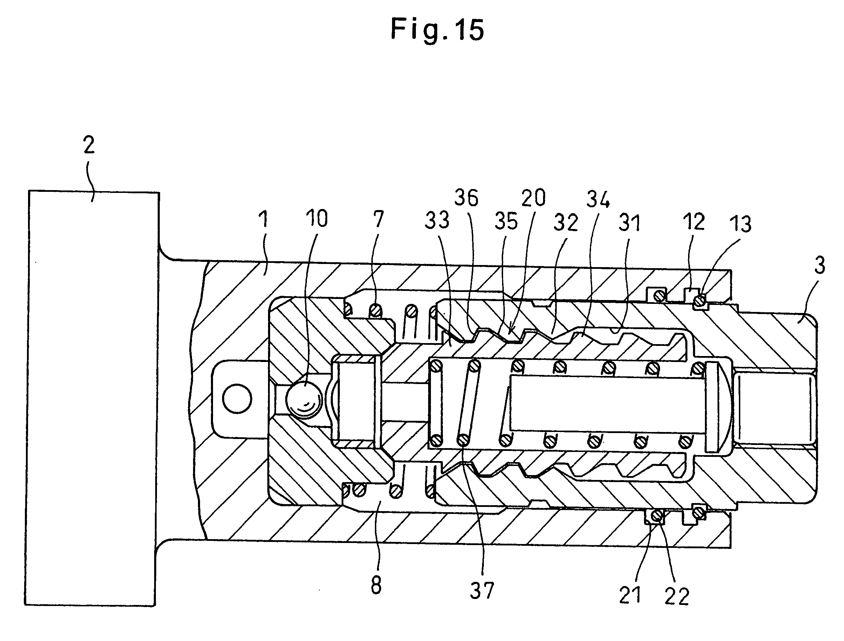

Fig. 15 shows another chain tensioner embodying this invention. The chain tensioner of this embodiment differs from the chain tensioner shown in Fig. 1 in that the retraction restricting means 20 for restricting the retraction of the plunger 3 is of a different structure, and that the force of the return spring 7 acts on the rear end surface of the plunger 3.

Thus, elements identical or similar to those of the chain tensioner shown in Fig. 1 are denoted by identical numerals and their description is omitted.

The retraction restricting means 20 shown in Fig. 15 comprises a rod inserting hole 31 formed in the plunger 3 so as to open to the rear end of the plunger 3 and having an internal thread 32 formed on the inner periphery of the rod inserting hole 31 near its rear open end, and a screw rod 33 having an external thread 34 formed on the outer periphery thereof and inserted in the rod inserting hole 31 with the external thread 34 in threaded engagement with the internal thread 32. Each of the internal and external threads 32 and 34 comprises a pressure flank 35 that receives the pushing force applied to the plunger, and a clearance flank 36 having a smaller flank angle than the pressure flank 35. The threads 32 and 34 have therefore a serration-shaped axial section. The threads 32 and 34 have such a lead angle that the plunger 3 and the screw rod 33 can be axially movable away from each other, while rotating relative to each other, under the force of a spring 37 mounted between the plunger 3 and the screw rod 33.

In this arrangement, when the tension of the chain increases and the plunger 3 is pushed in, the plunger 3 retracts until the gap between the internal and external threads 32 and 34 disappears. Then, if the pushing force applied to the plunger 3 is greater than the sum of the force of the return spring 7 and the force of the spring 37, the plunger 3 further retracts with the screw rod 33 rotating until the pushing force becomes equal to the sum of the forces of the return spring 7 and the spring 37.

If the chain is tensioned when the engine is stopped according to the stopped positions of the cams, and the pushing force is applied to the plunger 3 from the chain, since this pushing force is a static load, such force is received by the pressure flanks 35 of the internal and external threads 32 and 34, so that the plunger 3 never retracts and the chain is kept tensioned. Thus, when the engine is restarted, the chain never slackens markedly.

## Claims

1. A chain tensioner comprising a cylindrical housing (1) having an open end and a closed end, a plunger (3) slidably mounted in said housing (1), a return spring (7) mounted in said housing (1) and biasing said plunger (3) outwardly of said housing (1), said housing (1) being formed with an oil supply passage (9) communicating with a pressure chamber (8) defined in said housing (1) behind said plunger (3), a check valve (10) provided at an oil outlet of said oil supply passage (9) for preventing backflow of oil in said pressure chamber (8) into said oil supply passage (9), said housing (1) being further formed with a stepped setting groove (12) in a radially inner surface thereof near said open end, said setting groove (12) comprising a deep portion (12a) and a shallow portion (12b) located nearer to said open end than is said deep portion (12a), and a radially elastically deformable setting ring (13) having two separate opposed circumferential ends and received in said setting groove (12) in a radially compressed state, said setting ring (13) including a pair of tabs (13a) provided at said two separate opposed circumferential ends, respectively, and received in a cutout (14) formed in said housing (1) at said open end, wherein said setting ring (13) can be radially compressed by operating said tabs (13a), and wherein said plunger (3) can be retained in a position where the plunger (3) is pushed in the housing (1) by engaging said setting ring (13) in an engaging groove (15) formed in a radially outer surface of said plunger (3) near its front end, while keeping said setting ring (13) in elastic contact with a bottom of said shallow portion (12b) of said setting groove (12), **characterized in that** said tabs (13a) of said setting ring (13) extend in directions that intersect a plane perpendicular to a central axis of said setting ring (13).

2. The chain tensioner of claim 1 wherein said pair of tabs (13a) are circular in shape.

3. The chain tensioner of claim 1 wherein said pair of tabs (13a) are in the shape of water drops.

4. The chain tensioner of claim 1 wherein said pair of tabs (13a) are arc-shaped.

5. The chain tensioner of claim 1 wherein said pair of tabs (13a) are substantially U-shaped.

6. The chain tensioner of claim 1 wherein said pair of tabs (13a) are substantially V-shaped.

7. The chain tensioner of claim 1 wherein said pair of tabs (13a) are substantially straight in shape.

8. The chain tensioner of claim 1 wherein said pair of tabs (13a) are substantially straight in shape and extend obliquely radially outwardly.

## Patentansprüche

1. Kettenspanner, aufweisend ein zylindrisches Gehäuse (1) mit einem offenen Ende und einem geschlossenen Ende, einen Kolben (3), gleitbar montiert in dem Gehäuse (1), eine Rückholfeder (7), montiert in dem Gehäuse (1) und den Kolben (3) nach außerhalb des Gehäuses (1) vorspannend, wobei das Gehäuse (1) mit einem Ölzuführungskanal (9) versehen ist, der mit einer Druckkammer (8), gebildet in dem Gehäuse (1) hinter dem Kolben (3), in Verbindung ist, ein Rückschlagventil (10), vorgesehen an dem Ölauslass des Ölzuführungskanales (9), um ein Zurückfließen von Öl in der Druckkammer (8) in den Ölzuführungskanal (9) zu verhindern, wobei das Gehäuse (1) außerdem mit einer gestuften Haltenut (12) in einer radialen inneren Oberfläche desselben nahe des offenen Endes gebildet ist, wobei die Haltenut (12) aufweist einen tiefen Abschnitt (12a) und einen flachen Abschnitt (12b), angeordnet näher zu dem offenen Ende als der tiefe Abschnitt (12a), und einen radialen elastisch verformbaren Haltering (13) mit zwei separaten gegenüberliegenden Umfangsenden und aufgenommen in der Haltenut (12) in einem radial komprimierten Zustand, wobei der Haltering (13) ein Paar von Vorsprüngen (13a) enthält, jeweils vorgesehen an den zwei separaten gegenüberliegenden Umfangsenden und aufgenommen in einem Ausschnitt (14), gebildet in dem Gehäuse (1) an dem offenen Ende, wobei der Haltering (13) durch Betätigen der Vorsprünge (13a) radial komprimiert werden kann und wobei der Kolben (3) in einer Position zurückgehalten werden kann, in der der Kolben (3) in das Gehäuse (1) gedrückt wird, durch Eingreifen des Halterings (13) in einer Haltenut (15), gebildet in einer radial äußeren Oberfläche des Kolbens (3) nahe seines vorderen Endes, während der Haltering (13) in elastischem Kontakt mit einem Boden des flachen Abschnittes (12b) der Haltenut (12) gehalten wird, **dadurch gekennzeichnet, dass** sich die Vorsprünge (13a) des Halterings (13) in Richtungen erstrecken, die eine Ebene rechtwinklig zu einer Mittelachse des Halterings (13) schneiden.

2. Kettenspanner nach Anspruch 1, wobei das Paar von Vorsprüngen (13a) in der Form kreisförmig ist.

3. Kettenspanner nach Anspruch 1, wobei das Paar von Vorsprüngen (13a) in der Form von Wassertropfen ist.

4. Kettenspanner nach Anspruch 1, wobei das Paar von Vorsprüngen (13a) bogenförmig ist.

5. Kettenspanner nach Anspruch 1, wobei das Paar von Vorsprüngen (13a) im Wesentlichen U- förmig ist.

6. Kettenspanner nach Anspruch 1, wobei das Paar von Vorsprüngen (13a) im Wesentlichen V- förmig ist.

7. Kettenspanner nach Anspruch 1, wobei das Paar von Vorsprüngen (13a) im Wesentlichen in der Form gerade ist.

8. Kettenspanner nach Anspruch 1, wobei das Paar von Vorsprüngen (13a) im Wesentlichen in der Form gerade ist und sich schräg radial nach außen erstreckt.

## Revendications

1. Tendeur de chaîne comprenant un boîtier cylindrique (1) ayant une extrémité ouverte et une extrémité fermée, un plongeur (3) installé d'une manière coulissante dans ledit boîtier (1), un ressort de rappel (7) installé dans ledit boîtier (1) et sollicitant ledit plongeur (3) vers l'extérieur dudit boîtier (1), ledit boîtier (1) présentant un passage d'amenée d'huile (9) communiquant avec une chambre de pression (8) définie dans ledit boîtier (1) derrière ledit plongeur (3), une vanne de retenue (10) réalisée à une sortie d'huile dudit passage d'amenée d'huile (9) pour empêcher un reflux de l'huile dans ladite chambre de pression (8) dans ledit passage d'amenée d'huile (9), ledit boîtier (1) présentant en outre une rainure de réglage étagée (12) dans sa surface radialement intérieure près de ladite extrémité ouverte, ladite rainure de réglage (12) comprenant une portion profonde (12a) et une portion peu profonde (12b) située plus près de ladite extrémité ouverte que ne l'est ladite portion profonde (12a) et une bague de réglage radialement élastiquement déformable (13) ayant deux extrémités circonférentielles séparées opposées et reçue dans ladite rainure de réglage (12) dans un état radialement compressé, ladite bague de réglage (13) comprenant une paire de pattes (13a) réalisées auxdites deux extrémités circonférentielles opposées séparées, respectivement, et reçues dans une découpure (14) formée dans ledit boîtier (1) à ladite extrémité ouverte, où ladite bague de réglage (13) peut être radialement compressée en actionnant lesdites pattes (13a), et où ledit plongeur (3) peut être retenu dans une position dans laquelle le plongeur (3) est poussé dans le boîtier (1) en engageant ladite bague de réglage (13) dans une rainure d'engagement (15) formée dans une surface radialement extérieure dudit plongeur (3) près de son extrémité frontale tout en maintenant ladite bague de réglage (13) en contact élastique avec un fond de ladite portion peu profonde (12b) de ladite rainure de réglage (12),
**caractérisé en ce que** lesdites pattes (13a) de ladite bague de réglage (13) s'étendent dans des directions qui se croisent dans un plan perpendiculaire à un axe central de ladite bague de réglage (13).

2. Tendeur de chaîne selon la revendication 1, dans lequel ladite paire de pattes (13a) ont une forme circulaire.

3. Tendeur de chaîne selon la revendication 1, dans lequel ladite paire de pattes (13a) se présente sous la forme de gouttes d'eau.

4. Tendeur de chaîne selon la revendication 1, dans lequel ladite paire de pattes (13a) sont en forme d'arc.

5. Tendeur de chaîne selon la revendication 1, où ladite paire de pattes (13a) sont sensiblement en forme de U.

6. Tendeur de chaîne selon la revendication 1, dans lequel ladite paire de pattes (13a) sont sensiblement en forme de V.

7. Tendeur de chaîne selon la revendication 1, dans lequel ladite paire de pattes (13a) ont une forme sensiblement rectiligne.

8. Tendeur de chaîne selon la revendication 1, dans lequel ladite paire de pattes (13a) ont une forme sensiblement rectiligne et s'étendent en biais radialement vers l'extérieur.
